# EUROPÄISCHE PATENTSCHRIFT

(11) **EP 1 226 755 B1**
(45) Veröffentlichungstag und Bekanntmachung des Hinweises auf die Patenterteilung: **02.04.2003**
(21) Anmeldenummer: 01101798.5
(22) Anmeldetag: 26.01.2001
(51) Int. Cl.: A01N 3/00, A23B 7/04, A23B 9/10

(54) **Verfahren zur Schädlingsbekämpfung bei Vorratswaren**
Method of controlling pests in stored products
Procédé pour lutter contre les nuisibles dans les produits stockés

(43) Veröffentlichungstag der Anmeldung: 31.07.2002
(73) Patentinhaber: Kreyenberg, Heinrich, Dipl. Ing. Dr. (EC), 40885 Ratingen (DE)
(72) Erfinder: Kreyenberg, Heinrich, Dipl. Ing. Dr. (EC), 40885 Ratingen (DE)
(74) Vertreter: Stenger, Watzke & Ring Patentanwälte

(56) Entgegenhaltungen:
- EP-A- 0 531 900

## Beschreibung

Die vorliegende Erfindung betrifft ein Verfahren zur Schädlingsbekämpfung bei Vorratswaren. Zu Vorratswaren gehören dabei insbesondere trockene Pflanzenstoffe, darunter Tabakwaren, Tee, Reis, Kakao, Gewürze, Drogen und Trockenfrüchte.

Bei obigen Waren ergibt sich das Problem, das diese von Vorratsschädlingen befallen werden. Zu derartigen Vorratsschädlingen gehören beispielsweise der Brotkäfer (*Stegobium paniceum)* oder der sogenannte Zigarrenkäfer *(Lasioderma serricorne)*. Dabei befallen diese Vorratsschädlinge insbesondere auch Tabakwaren, wobei sie sich im fermentierten Tabak oder in der Fertigware entwickeln. Die Larven fressen Gänge in die Ware und verpuppen sich an den Blattrippen. Bei der Zigarrenherstellung ist dies ein Problem, welches beträchtliche wirtschaftliche Schädigungen zur Folge hat Generell bieten auch Verpackungsmaterialien wenig Schutz vor Vorratsschädlingen, da die Larven selbst durch kleinste Ritzen dringen und die jeweilige Ware befallen. Neben dem wirtschaftlichen Verlust durch unbrauchbar gewordene Ware ist auch der drohende Verlust des Kundenvertrauens durch den Kauf von mit Schädlingen befallener Ware erheblich.

Daher ist man bestrebt, die Schädlinge zu vernichten. Um dies zu erreichen, werden die Vorratswaren üblicherweise mit Fumagentien begast. Fumagentien sind hochgiftige Stoffe wie beispielsweise Blausäure, Phosphorwasserstoff, Zn-, Ca-, AI-Phosphide, Methylbromid, Formaldehyd oder Ethylenoxid. Dabei wird das Befallsgut mit diesen hochgiftigen Gasen begast, was das Absterben insbesondere der Käfer und Larven zur Folge hat. Der Vorteil dieser Begasungsmittel ist, daß sie ein hohes Penetrationsvermögen aufweisen und somit nicht nur oberflächlich wirken, sondern auch Schädlinge im Inneren der Ware abtöten. Jedoch birgt dies den beträchtlichen Nachteil, daß das behandelte Befallsgut Rückstände des Begasungsmittels aufweist, die nicht nur oberflächlich sind und daher auch nicht einfach abgewaschen werden können. Diese Rückstände stellen eine Gesundheitsbelastung für den Verbraucher dar. Dies ist insbesondere bei Tabakwaren der Fall, da diese Schadstoffe über die Mundschleimhäute und in Folge der Inhalation über die Lungenoberfläche in den Körper aufgenommen werden. Zudem bedenklich ist bei den herkömmlich eingesetzten Begasungsverfahren, daß nicht nur Rohware vor der Verarbeitung begast wird, sondern auch die fertig verarbeitete Ware, welche anschließend zum Gebrauch für den Verbraucher bereitsteht. Bei Tabakerzeugnissen wie bei der Zigarre, wird nicht nur der fermentierte Tabak begast, sondern zudem die fertige Zigarre. Dabei werden bei diesem finalen Begasungsschritt hohe Mengen der hochgiftigen Gase eingesetzt, um sicherzustellen, daß das fertige Produkt frei von Schädlingen ist und der Verbraucher keine beschädigte Ware erhält. Dabei verbleiben jedoch Rückstände der hochgiftigen Gase am fertigen Produkt.

Neben den Gesundheitsbelastungen für den Verbraucher birgt das herkömmliche Verfahren zur Schädlingsbekämpfung den Nachteil, daß neben den Käfern zumeist nur die bereits geschlüpften Larven vernichtet werden und die Eier aufgrund der Begasung oftmals nicht absterben. Daher bleibt die Gefahr, daß Larven aus den die Begasung überlebenden Eiern in der fertigen Ware schlüpfen und diese verderben, was wiederum die oben genannte unerwünschte Beschädigung der Ware und den möglichen Vertrauensverlust des Kunden zur Folge hat.

Auch hat das herkömmliche Verfahren den Nachteil, daß besondere Sicherheitsvorkehrungen beim Umgang mit Fumagentien und insbesondere beim Umgang mit Phosphorwasserstoff und Blausäure beachtet werden müssen, um eine Gefährdung der Arbeiter zu vermeiden, da diese Stoffe nicht nur hochgiftig sind, sondern auch explosive Gemische bilden können. Daher sind bei der Lagerung der Fumagentien und beim Umgang mit diesen strenge Sicherheitsbedingungen zu beachten, was neben der erhöhten Gefahr für das Arbeitspersonal und die daraus resultierende erforderliche Umsicht auch einen erhöhten Kostenaufwand birgt. Gemäß der Gefahrenstoffverordnung und der diesbezüglichen technischen Regeln dürfen derartige Begasungsmittel aufgrund ihrer Gefährlichkeit nur an Firmen abgegeben werden, die eine Erlaubnis für diese Stoffe aufweisen, wobei die Anwendung nur von Befähigungsscheininhabern oder Sachkundigen vorgenommen werden darf.

Dabei ist die Begasung an sich sehr aufwendig. Die Begasung umfaßt im wesentlichen fünf Arbeitsschritte, die je nach Größe des zu begasenden Objekts Tage bis Monate beanspruchen können. Dabei sind jeweils Gaskonzentrationsmessungen beim Einbringen des Begasungsmittels, bei der Überwachung der Begasung, bei der Lüftung und bei den Freigabearbeiten durchzuführen. Dabei dürfen die mit den chemischen Mitteln behandelten Objekte erst dann freigegeben werden, wenn bestimmte Konzentrationswerte unterschritten sind. Dies führt dazu, daß die genauen Zeiträume der Begasung nicht immer planbar sind und unter Umständen Lieferungsschwierigkeiten auftreten können. Auch müssen für die Waren bis diese die jeweils erlaubte Konzentration unterschritten haben, geeignete Lagerkapazitäten zur Verfügung gestellt werden.

Insgesamt ist mit den herkömmlichen für die Bekämpfung von Vorratswaren eingesetzten Begasungsverfahren ein immenser Zeit und Kostenaufwand verbunden, der sich nachteilig auf die Produktivität einer Verarbeitungsanlage auswirkt. Darüber hinaus stellen diese Mittel ein erhebliches Gesundheitsrisiko für das Arbeitspersonal und den Verbraucher dar. Auch ist die Umweltbelastung durch die hochgiftigen Chemikalien, welche teilweise wie Brommethan zusätzlich die Ozonschicht schädigen, außerordentlich nachteilig.

Ein weiteres Verfahren zur Bekämpfung von Vorratsschädlingen, welches aufgrund seiner Risiken nur in bestimmten Ländern angewandt werden darf, nutzt Gammastrahlen, um sich der Schädlinge zu entledigen. Auch hierbei sind die Gesundheitsrisiken sowohl für das Arbeitspersonal als auch für den Verbraucher beachtlich, da es neben der erhöhten Strahlenbelastung zu carcinogenen Radikalbildungen in der Ware kommen kann.

Daher liegt der Erfindung die **Aufgabe** zu Grunde, ein Verfahren zur Bekämpfung von Schädlingen bei Vorratswaren bereitzustellen, welches den Stand der Technik dahingehend verbessert, daß bei der Bekämpfung der Schädling in all seinen Entwicklungsstufen vernichtet wird, wobei auf die Gesundheit gefährdende Stoffe verzichtet werden soll.

Die Aufgabe ist erfindungsgemäß dadurch **gelöst** , daß das Befallsgut zeitweise bei Minustemperaturen schockgefroren wird, wobei die Mindestdauer und die Mindesttemperatur des Schockbehandlung so gewählt wird, daß der Vorratsschädling in all seinen Entwicklungsstadien abgetötet wird.

Mit dem erfindungsgemäßen Verfahren werden die aus dem Stand der Technik bekannten Nachteile in überraschender Weise vermieden. So ermöglicht es die vorliegende Erfindung, daß auf die herkömmlich eingesetzte Begasung oder Gammastrahlenbehandlung zur Schädlingsbekämpfung verzichtet werden kann. Dadurch werden in vorteilhafter Weise die oben genannten Nachteile und Risiken dieser Behandlungsweisen umgangen.

So ist der erfindungsgemäße Einsatz von Kälte sowohl unschädlich für den Endverbraucher, als auch für das an der Herstellung des jeweiligen Produkts beteiligte Arbeitspersonal. Bei Anwendung des erfindungsgemäßen Verfahrens verbleiben keine gesundheitsschädlichen Rückstände aufgrund verwendeter giftiger Chemikalien an der Ware, so daß der Verbraucher sicher sein kann, daß er keine derartigen gesundheitsgefährdenden Stoffe mit der Ware zu sich nimmt. Auch entfällt bei der Behandlung der Umgang mit diesem hochgiftigen Chemikalien, was vorteilhaft in Bezug auf die Arbeitssicherheit ist. Auf aufwendige und teure Sicherheitsvorkehrungen beim Umgang und bei der Lagerung, wie bei den herkömmlich eingesetzten hochgiftigen Chemikalien, kann verzichtet werden, was der Wirtschaftlichkeit des erfindungsgemäßen Verfahrens zuträglich ist. Auch sind wesentlich weniger Arbeitsschritte erforderlich, was wiederum die Produktivität steigert. Neben der vorteilhaften Einsparung an Arbeitsschritten ist auch zu berücksichtigen, daß die Ware nur für einen begrenzten Zeitraum behandelt werden muß, und nicht erst solange gelagert werden muß, bis bestimmte Konzentrationswerte an Giftstoffen unterschritten sind. Dies hat zur Folge, daß die Weiterverwendung der Ware im Vorfeld ohne Unsicherheitsparameter in Bezug auf die Schädlingsbekämpfung planbar ist, was bei dem herkömmlichen Begasungsverfahren nicht immer möglich ist.

Neben der vorteilhaften Kosteneinsparung aufgrund nunmehr überflüssiger Sicherheitsvorkehrungen und entfallenden Lagerkapazitäten ist das erfindungsgemäße Verfahren wesentlich umweltschonender als die herkömmlichen Techniken, da keine umweltbelastenden Chemikalien oder Strahlungen zum Einsatz kommen. Dabei ist der mit dem erfindungsgemäßen Verfahren mögliche Verzicht auf Chemikalien nicht nur hinsichtlich der allgemein angestrebten Reduzierung von Chemikalien bei der Bekämpfung von Schädlingen im Hinblick auf nachteilige Umweltbelastungen von Vorteil, der Verzicht auf die Chemikalien ist auch dahingehend außerordentlich vorteilhaft, daß der Verbraucher vor unnötigen Gesundheitsbelastungen aufgrund giftiger Chemikalien bewahrt wird. Dies ist insbesondere vor dem immer kritischer werdenden Bewußtseins des Verbrauchers gegenüber derartigen Substanzen auch von großem wirtschaftlichen Vorteil, da der Verzicht auf gesundheitsschädliche Chemikalien werbewirksam genutzt werden kann.

Bei dem erfindungsgemäßen Verfahren werden die Mindesttemperatur und die Mindestdauer der Schockbehandlung so gewählt, daß der Vorratsschädling in all seinen Entwicklungsstadien abgetötet wird. Unter dem Begriff Schädling wird dabei sowohl der Käfer als auch seine Larve verstanden, welche die Schädigungen an der Vorratsware durch das Graben von Gängen verursacht. Mit dem erfindungsgemäßen Verfahren werden nicht nur der Schädling, also der Käfer und die Larve, sondern zusätzlich auch seine Eier abgetötet, welche oftmals gegenüber den herkömmlichen Begasungsverfahren resistent sind. Aufgrund der Abtötung der Eier wird sichergestellt, daß beim Transport und/oder bei der Lagerung der Ware keine Larven aus überlebenden Eiern schlüpfen und in Folge dessen die Ware beschädigt wird. Daher wird durch das erfindungsgemäße Verfahren die Gefahr eines wirtschaftlichen Schadens durch Schädlinge minimiert, da die Ware aufgrund der Abtötung der Eier langfristig von dem Schädling befreit wird. Höhere Qualitätsstandards können gegenüber dem Händler und gegenüber dem Kunden gewährleistet werden.

Auch kann die Kältebehandlung in vorteilhafter Weise auch an verschiedene, die jeweilige Vorratsware befallende Schädlinge angepaßt werden und verschiedene Schädlinge können somit effektiv vernichtet werden. Die eingesetzten Temperaturen können an die unterschiedlichen Sensitivitäten der einzelnen Vorratsschädlinge angepaßt werden. Daher können mit dem erfindungsgemäßen Verfahren die unterschiedlichsten, von Vorratsschädlingen befallenen Waren, die herkömmlicher Weise begast oder bestrahlt werden, mit dem Verfahren effektiv und umweltschonend gegen unterschiedliche Vorratsschädlinge behandelt werden. Aufgrund der Tatsache, daß das Cytosol in den Zellen der jeweiligen Schädlinge ab einer gewissen Minustemperatur gefriert, ist es möglich, die Vorratsschädlinge in all ihren Entwicklungsstadien effektiv zu vernichten, da es zu Eiskristallbildungen in den Zellen kommt, was ein Absterben dieser zur Folge hat Dabei liegt diese kritische Temperatur im Bereich weniger Minusgrade. Jedoch sind teilweise auch etwas höhere Temperaturen um den Gefrierpunkt ausreichend, insbesondere dann, wenn sich ein Vorratsschädling besonders empfindlich gegen Kälte zeigt. Je niedriger die Schockfriertemperatur gewählt wird, desto schneller wird der Schädling in all seinen Entwicklungsstadien abgetötet. Mit der Erfindung wird vorgeschlagen, das Befallsgut bei wenigstens -10°C bis -40°C, vorzugsweise bei -25°C, schockzufrieren. In diesen Temperaturbereichen werden die Vorratsschädlinge in all ihren Entwicklungsstadien binnen kurzer Zeit abgetötet und vernichtet. Auch ist die Verwendung dieser Temperaturbereiche auch dahingehend von Vorteil, daß sie den allgemein den üblichen Temperaturen in Kühlhäusern entsprechen und daher herkömmliche Anlagen verwendet werden können. Dabei kann das Befallsgut im einfachsten Fall in einen adequat temperierten Kühlraum gebracht werden und dort so lange gelagert werden, bis sichergestellt ist, daß der Schädling in all seinen Entwicklungsstadien abgetötet ist. Dabei ist das erfindungsgemäße Verfahren wenig aufwendig, einfach anzuwenden und wenig störanfällig, was es äußerst sicher und praktikabel macht. Daß die Ware nur für einen relativ kurzen Zeitraum schockgefroren werden muß, ist vorteilhaft in Hinblick auf die Verfahrensdauer.

Ferner konserviert die Kältebehandlung in vorteilhafter Weise die Feuchtigkeit, den Geschmack und das Aroma der jeweiligen Vorratsware. Die Schockfrierung ist insbesondere dann vorteilhaft, wenn die Behandlung an der fertig verarbeiteten Ware, also am fertigen Produkt, erfolgt, sie kann jedoch aber auch beispielsweise zusätzlich vor der Verarbeitung erfolgen. Durch die Schockfrierung wird die fertige Ware direkt gekühlt und kann in diesem Zustand beispielsweise auch transportiert oder gelagert werden. Die Lagerung in diesem Zustand hat neben der Abtötung des Schädlings in all seinen Entwicklungsstufen den Vorteil, daß der Feuchtigkeitsgehalt in beispielsweise Tabakerzeugnissen im wesentlichen konstant bleibt und Austrocknungen des Tabaks vermieden werden. Der Transport und/oder die Lagerung bei diesen Temperaturen verhindert ferner einen Neubefall der Ware durch Schädlinge beim Transport oder der Lagerung der Ware.

Gemäß einer vorteilhaften Weiterbildung wird ferner vorgeschlagen, daß die Dauer und die Temperatur der Schockfrierung derart aufeinander abgestimmt werden, daß sie an die jeweilige Vorratsware und an den zu tötenden Schädling angepaßt sind. Dadurch wird in vorteilhafter Weise ermöglicht, die Temperaturen und die Dauer der Kühlung an die jeweils zu behandelnde Vorratsware anzupassen, so daß Beschädigungen an dieser vermieden werden. Dadurch ist das erfindungsgemäße Verfahren sehr flexibel hinsichtlich des Befallsgut und hinsichtlich des abzutötenden Vorratsschädlings. Dadurch ist das erfindungsgemäße Verfahren weitreichend einsetzbar.

Gemäß einem weiteren Vorschlag erfolgt die Schockfrierung für einen Zeitraum von ca. 24h bis 72h. In dieser Zeitspanne und bei Temperaturen von -10°C bis - 40°C werden Vorratsschädlinge effektiv abgetötet, so daß er zumeist ausreichend für eine effektive Schädlingsvernichtung ist. Jedoch können die Vorratswaren je nach Vorratsware auch für längere Zeiten gefroren bleibe, so beispielsweise während des gesamten Transports, um einen neuerlichen Befall der Ware zu verhindern.

Gemäß einer vorteilhaften Weiterbildung der Erfindung wird ferner vorgeschlagen, daß das Befallsgut zeitweise mit Mikrowellen behandelt wird, wobei die Behandlungsdauer und die mittlere Leistung der Mikrowellen derart aufeinander abgestimmt werden, daß der Schädling in all seinen Entwicklungsstadien abgetötet wird. Dabei kann das Befallsgut vor und/oder nach der Schockfrierung mit Mikrowellen bestrahlt werden. Die Bestrahlung des Befallsguts mit Mikrowellen führt auch zu einer effektiven Abtötung des Schädlings und seiner Eier. Daher kann diese Technik als zusätzliche Sicherheitsmaßnahme in Kombination mit der Kältebehandlung eingesetzt werden, um sicherzustellen, daß die Vorratsware frei von Schädlingen ist.

Der Einsatz von Mikrowellen zur Unterstützung der Schädlingsbekämpfung mittels Kälte ist auch unter dem Gesichtspunkt vorteilhaft, daß auf hochgiftige Stoffe oder Gammastrahlen verzichtet werden kann. Daher ist diese als unterstützende Maßnahme zur Kältebehandlung vorteilhaft, da auch bei dieser Behandlung auf die Gesundheit gefährdende Stoffe, welche Rückstände auf den Waren belassen könnten, verzichtet werden kann.

So hat der zusätzliche Einsatz von Mikrowellen ferner den Vorteil, daß die Behandlung nur für einen relativ kurzen Zeitraum erfolgen muß, da der Einsatz von Mikrowellen eine vorteilhafte Energiebündelung bewirkt. Die Mikrowellenbehandlung führt zu einer Denaturierung der Proteine in den Zellen des Schädlings, was ein Absterben des Vorratsschädlings in all seinen Entwicklungsstadien zur Folge hat. Auf langwierige Heizphasen, welche die jeweilige Vorratsware durch die langanhaltenden hohen Temperaturen schädigen könnten, kann verzichtet werden. Mittels des erfindungsgemäßen Verfahrens ist eine gleichmäßige Erwärmung der Ware möglich und es kann auf eine Kontakterwärmung verzichtet werden, welche zur Folge haben könnte, daß die Ware angesengt wird, wie es beispielsweise bei dem Einsatz einer Heizplatte die Folge sein könnte. Dadurch wird ferner auch ein insbesondere bei der Tabakherstellung nachteiliges Austrocknen der Ware verhindert. Auch werden Spuren der Behandlung, wie beispielsweise angesengte Stellen, auf der Ware vermieden, was der attraktiven Optik der Ware zuträglich ist.

Gemäß einer vorteilhaften Weiterbildung wird die potentiell befallene Ware nur kurzzeitig mit Mikrowellen behandelt. So liegt die Dauer der Mikrowelleneinwirkung vorzugsweise unterhalb einer Minute bei ca. 200-1200W, vorzugsweise bei 700W. Dabei ist die Behandlungsdauer auch an die jeweiligen Menge der Ware anzupassen. Die Mikrowellenbehandlung für einen kurzen Zeitraum durchzuführen, ist besonders schonend für die Vorratsware. Dadurch werden Qualitätsmängel an der Ware umgangen und der Geschmack, das Aroma und das Aussehen der Ware bleibt durch die Bestrahlung unbeeinflußt. Um größere Mengeneinheiten effektiv zu bestrahlen, können diese beispielsweise mittels Fördermitteln durch den eigentlichen Bestrahlungsbereich durchgeführt werden.

Für die Behandlung von insbesondere bei der Zigarrenherstellung verwendetem Tabak hat sich eine Behandlungsdauer mit Mikrowellen von 10 bis 15 sec bei ca. 700W als ausreichend erwiesen, sofern kleine Mengeneinheiten, wie beispielsweise eine Zigarrenkiste bestrahlt wurden. Diese kurze Behandlungsdauer von wenigen Sekunden führt dabei zu einer effektiven Abtötung der Eier und Larven des Zigarrenkäfers, hat jedoch keine nachteiligen Auswirkungen auf die Qualität der Tabakware. Die kurzen Behandlungszeiträume bedingen ferner den Vorteil, daß eine effektive und anhaltende Schädlingsbekämpfung nur wenig Zeit bei der Herstellung des fertigen Produkts erfordert.

Insgesamt bietet der Einsatz von Mikrowellen in Kombination mit der Schockfrierung den Vorteil, daß letztendlich durch zwei sich ergänzende Maßnahmen die Vorratsschädlinge effektiv abgetötet werden, so daß sichergestellt ist, daß die Ware frei von Schädlingen ist.

Gemäß einem weiteren Vorschlag kann die Bekämpfung der Schädlinge durch Schockfrieren entweder vor und/oder beim Verarbeiten der Vorratsware erfolgen oder aber beim fertigen Erzeugnis selbst. Ferner ist auch möglich, daß bei bestimmten Waren oder Vorratsschädlingen die Behandlung mit Mikrowellen sicherheitshalber zusätzlich durchgeführt wird, um einen Schädlingsbefall bei der fertigen Ware auszuschließen. So ist bei der Herstellung von Tabakerzeugnissen beispielsweise möglich, den fermentierten Tabak und/oder das fertige Produkt, wie beispielsweise eine Zigarre, neben der Schockfrierung zusätzlich mit Mikrowellen zu bestrahlen. Die Behandlung des fertigen Produkts mittels Schockfrierung und/oder Mikrowellen ist einfach durchführbar und erspart in vorteilhafter Weise den finalen Begasungsschritt, bei dem bei den herkömmlichen Verfahren große Mengen der hochgiftigen Begasungsmittel eingesetzt werden. Daher ist das erfindungsgemäße Verfahren besonders geeignet, diesen finalen Begasungsschritt, bei welchem Rückstände der giftigen Begasungsmittel an der Ware verbleiben können, zu umgehen und auf die hochgiftigen Fumagentien zu verzichten. Die Behandlung des fertigen Produkts nach dem erfindungsgemäßen Verfahren ist einfach und bereits bestehende Betriebe können ohne größeren Aufwand adaptiert werden, so daß ermöglicht wird, diesen finalen Begasungsschritt einzusparen, was einen erheblichen Vorteil gegenüber den herkömmlichen Verfahren darstellt und vorteilhaft für den Verbraucher ist, da die Fertigware chemisch nicht belastet wird.

Nachfolgend wird vorliegende Erfindung anhand eines Ausführungsbeispiels näher erläutert. Dieses dient ausschließlich der näheren Erläuterung und ist nicht beschränkend. Dabei bezieht sich das vorliegende Beispiel auf den Einsatz des erfindungsgemäßen Verfahrens bei der Bekämpfung des Zigarrenkäfers im Tabak bei der Herstellung von Zigarren. Dabei wird die fertige Zigarre gegen Schädlinge behandelt.

Um sicherzustellen, daß keine Schädlinge die Ware kontaminieren und somit beschädigen, werden die Zigarren im Anschluß an ihre Herstellung gegen Schädlingsbefall behandelt. Dabei werden die Zigarren für ca. 72h bei ungefähr - 25°C schockgefroren. In diesem Zeitraum werden sowohl Käfer, Larven und Eier des Vorratsschädlings, im vorliegenden Beispiel des Zigarrenkäfers *(Lasioderma serricorne)*, effektiv abgetötet. Dabei kann die Zigarre in diesem Zustand transportiert werden, so daß keine zusätzlichen Lagerkapazitäten für die gekühlten Zigarren erforderlich sind. Später werden die Zigarren langsam aufgetaut. Die so behandelte Zigarre zeichnet sich durch ein Aroma aus, welches in keiner Weise durch die Behandlung beeinträchtigt ist und ferner weist sie keine Rückstände von Schädlingsbekämpfungschemikalien auf, was vorteilhaft in Bezug auf die Gesundheit des Verbrauchers ist.

Das erfindungsgemäße Verfahren findet weitreichende Anwendungsmöglichkeiten bei der Schädlingsbekämpfung. Dabei hat es sich insbesondere für die Bekämpfung des Zigarrenkäfers *(Lasioderma serricorne*) bewährt, welcher die unterschiedlichsten Vorratswaren wie Tabakwaren, Gewürze, Drogen und Trockenfrüchte befällt. Dabei hat sich die Anwendung bei Tabak als sehr effektiv erwiesen; das erfindungsgemäße Verfahren kann aber auch darüber hinaus für andere Vorratswaren und gegen andere Vorratsschädlinge angewendet werden. Aufgrund des geringen Kosten und Müheaufwandes bei der Bekämpfung der Schädlinge, werden mit dem erfindungsgemäßen Verfahren sowohl Zeit als auch Kosten bei der Bekämpfung eingespart und die Vorratsschädlinge werden effektiver und umweltschonender als mit den herkömmlichen Methoden vernichtet, was vorteilhaft für den Verbraucher ist, da die Ware unverändert belassen bleibt und keine gesundheitsbelastenden Rückstände von Chemikalien an der Ware zurückbleiben. Dabei nimmt das erfindungsgemäße Verfahren nur wenig Zeit in Anspruch und zeichnet sich ferner durch eine einfache und darnit wenig störanfällige Durchführung aus.

## Patentansprüche

1. Verfahren zur Schädlingsbekämpfung bei Vorratswaren, insbesondere bei Tabakerzeugnissen,
**dadurch gekennzeichnet,**
**daß** das Befallsgut zeitweise bei Minustemperaturen schockgefroren wird, wobei die Mindestdauer und die Mindesttemperatur der Schockbehandlung so gewählt wird, daß der Vorratsschädling in all seinen Entwicklungsstadien abgetötet wird.

2. Verfahren nach Anspruch 1, **dadurch gekennzeichnet, daß** die Vorratsware bei wenigstens - 10°C bis -40°C, vorzugsweise bei -25°C, schockgefroren wird.

3. Verfahren nach einem der Ansprüche 1 oder 2, **dadurch gekennzeichnet, daß** Dauer und Temperatur der Schockfrierung aufeinander abgestimmt werden und der jeweiligen Vorratsware angepaßt werden.

4. Verfahren nach einem oder mehreren der Ansprüche 1 bis 3, **dadurch gekennzeichnet, daß** die Schockfrierung für einen Zeitraum von bis zu 72h erfolgt.

5. Verfahren nach einem oder mehreren der Ansprüche 1 bis 4, **dadurch gekennzeichnet, daß** die Schockfrierung im Anschluß an die Fertigstellung des Produkts erfolgt.

6. Verfahren nach einem oder mehreren der Ansprüche 1 bis 5, **dadurch gekennzeichnet, daß** das Befallsgut zeitweise mit Mikrowellen behandelt wird, wobei die Behandlungsdauer und die mittlere Leistung der Mikrowellen derart aufeinander abgestimmt werden, daß sowohl der Schädling selbst als auch seine Eier abgetötet werden.

7. Verfahren nach einem oder mehreren der Ansprüche 1 bis 6, **dadurch gekennzeichnet, daß** das Befallsgut vor und/oder nach der Schockfrierung mit Mikrowellen bestrahlt wird.

8. Verfahren nach einem oder mehreren der Ansprüche 1 bis 7, **dadurch gekennzeichnet, daß** das Befallsgut für einen Zeitraum von unter 1min mit Mikrowellen bei ca. 200 W bis 1200 W, vorzugsweise bei 700 W, behandelt wird, wobei diese Parameter der jeweils zu bestrahlenden Befallsgutmenge angepaßt werden.

9. Verfahren nach einem oder mehreren der Ansprüche 1 bis 8, **dadurch gekennzeichnet, daß** die verwendete Mikrowellenfrequenz an die erforderliche Eindringtiefe der Mikrowellen in die Ware angepaßt wird, wobei Mikrowellenfrequenzen in einem Bereich von 2 bis 20 GHz, vorzugsweise 2 bis 5 GHz, eingesetzt werden.

10. Verfahren nach einem oder mehreren der Ansprüche 1 bis 9, **dadurch gekennzeichnet, daß** die Behandlungsdauer, Temperatur und die mittlere Leistung der Mikrowellen derart aufeinander abgestimmt werden, daß sowohl der Schädling selbst als auch seine Eier abgetötet werden, die Vorratsware selbst jedoch nicht beschädigt wird.

## Claims

1. Method of controlling pests in stored products, in particular in tobacco products,
**characterised in that** the affected commodity is quick-frozen for a period at minus temperatures, wherein the minimum duration and the minimum temperature of the quick treatment are selected such that the stored product pest is destroyed in all its stages of development.

2. Method according to Claim 1, **characterised in that** the stored product is quick-frozen at least at - 10°C to - 40°C, preferably at - 25°C.

3. Method according to either of Claims 1 and 2, **characterised in that** the duration and the temperature of the quick freezing are adapted to one another and the respective stored product.

4. Method according to one or more of Claims 1 to 3, **characterised in that** the quick freezing is carried out for a period of up to 72 h.

5. Method according to one or more of Claims 1 to 4, **characterised in that** the quick freezing is carried out following completion of the product.

6. Method according to one or more of Claims 1 to 5, **characterised in that** the affected commodity is treated for a period with microwaves, wherein the duration of the treatment and the average microwave power are adapted to one another such that both the actual pest and its eggs are destroyed.

7. Method according to one or more of Claims 1 to 6, **characterised in that** the affected commodity is irradiated with microwaves before and/or after quick freezing.

8. Method according to one or more of Claims 1 to 7, **characterised in that** the affected commodity is treated for a period of less than 1 min with microwaves at approximately 200 W to 1200 W, preferably at 700 W, wherein these parameters are adapted to the quantity of affected commodity to be irradiated at the time.

9. Method according to one or more of Claims 1 to 8, **characterised in that** the microwave frequency which is used is adapted to the required depth of penetration of the microwaves into the product, wherein microwave frequencies in a range from 2 to 20 GHz, preferably 2 to 5 GHz, are used.

10. Method according to one or more of Claims 1 to 9, **characterised in that** the duration of the treatment, the temperature and the average microwave power are adapted to one another such that both the actual pest and its eggs are destroyed, although the actual stored product is not damaged.

## Revendications

1. Procédé destiné à lutter contre les nuisibles dans des produits stockés, notamment dans des produits à base de tabac
**caractérisé en ce que** la marchandise infestée est soumise temporairement à une congélation ultrarapide à des températures inférieures à zéro, la durée minimale et la température minimale du traitement ultrarapide étant choisies de telle sorte que le nuisible de stockage soit tué à tous ses stades de développement.

2. Procédé selon la revendication 1, **caractérisé en ce que** la congélation ultrarapide du produit stocké est effectuée à une température d'au moins - 10 °C à - 40 °C, de préférence à - 25 °C.

3. Procédé selon la revendication 1 ou 2, **caractérisé en ce que** la durée et la température de la congélation ultrarapide sont accordées entre elles, et adaptées au produit stocké respectif.

4. Procédé selon l'une ou plusieurs des revendications 1 à 3, **caractérisé en ce que** la congélation ultrarapide est effectuée pendant un laps de temps pouvant aller jusqu'à 72 h.

5. Procédé selon l'une ou plusieurs des revendications 1 à 4, **caractérisé en ce que** la congélation ultrarapide est effectuée après la finition du produit.

6. Procédé selon l'une ou plusieurs des revendications 1 à 5, **caractérisé en ce que** la marchandise infestée est traitée temporairement par des micro-ondes, la durée de traitement et la puissance moyenne des micro-ondes étant adaptées entre elles de telle sorte que, aussi bien le nuisible même que ses oeufs, soient tués.

7. Procédé selon l'une ou plusieurs des revendications 1 à 6, **caractérisé en ce que** la marchandise infestée est exposée aux micro-ondes avant et/ou après la congélation ultrarapide.

8. Procédé selon l'une ou plusieurs des revendications 1 à 7, **caractérisé en ce que** la marchandise infestée est traitée avec des micro-ondes à environ 200 à 1 200 W, de préférence 700 W, pendant une durée de temps inférieure à 1 min, ces paramètres étant adaptés à la quantité de marchandise infestée à traiter.

9. Procédé selon l'une ou plusieurs des revendications 1 à 8, **caractérisé en ce que** la fréquence des micro-ondes utilisée est adaptée à la profondeur de pénétration nécessaire des micro-ondes dans la marchandise, des fréquences de micro-ondes dans une plage comprise entre 2 et 20 GHz, de préférence entre 2 et 5 GHz, étant utilisées.

10. Procédé selon l'une ou plusieurs des revendications 1 à 9, **caractérisé en ce que** la durée du traitement, la température et la puissance moyenne des micro-ondes sont adaptées entre elles de telle sorte que, aussi bien le nuisible même que ses oeufs soient tués, que le produit stocké ne soit cependant pas dégradé.
